# EUROPÄISCHE PATENTSCHRIFT

(11) **EP 2 283 909 B1**
(45) Veröffentlichungstag und Bekanntmachung des Hinweises auf die Patenterteilung: **17.09.2014**
(21) Anmeldenummer: 10006532.5
(22) Anmeldetag: 23.06.2010
(51) Int. Cl.: B01D 35/153

(54) **Ölfiltervorrichtung mit einer Entölungseinrichtung**
Oil filter with an oil removal device
Dispositif de filtre à huile doté d'un dispositif de déshuilage

(30) Priorität: 13.07.2009 DE 102009032849
(43) Veröffentlichungstag der Anmeldung: 16.02.2011
(73) Patentinhaber: IBS Filtran Kunststoff-/Metallerzeugnisse GmbH, 51597 Morsbach (DE)
(72) Erfinder: Jaspers, Jörge, 51597 Morsbach (DE)
(74) Vertreter: Kierdorf Ritschel

(56) Entgegenhaltungen:
- DE-A1- 19 606 616
- FR-A1- 2 828 909

## Beschreibung

Die Erfindung betrifft eine Ölfiltervorrichtung gemäß dem Oberbegriff des Anspruchs 1.

Solche Ölfiltervorrichtungen werden z. B. zur Reinigung von Motoröl und/oder Getriebeöl insbesondere im Kraftfahrzeugbereich eingesetzt.

Eine Ölfiltervorrichtung der betreffenden Art umfasst ein Filtermodul und eine Filterkappe, welche das Filtermodul aufnimmt und an einem korrespondierenden Modulträger haltert. Zu Servicezwecken ist die Filterkappe vom Modulträger abnehmbar, um z. B. das Filtermodul auszutauschen. Um beim Abnehmen der Filterkappe einen unerwünschten Ölaustritt zu vermeiden, sollte das im Innenraum der Filterkappe befindliche Öl und ggf. auch das z. B. im Ölsumpf von Getriebe und/oder Motor befindliche Öl zuvor entfernt werden, was z. B. mittels einer Entölungseinrichtung erfolgen kann. Aus der EP 0 891 214 B1 ist eine Filterkappe mit einer Ölablassschraube bekannt. Die Entleerung des Öls mittels einer solchen Ölablassschraube ist insbesondere im täglichen Werkstattablauf aufwändig. Zudem wird die Anzahl der Bauteile erhöht.

Eine Ölfiltervorrichtung gemäß Oberbegriff von Anspruch 1 ist aus der FR 2 828 909 A bekannt, wobei die dort in einen Modulträger eingeschraubte Filterkappe eine erste Filterkappendichtung und eine zweite Filterkappendichtung aufweist, wobei die erste Filterkappendichtung eine stirnseitige Abdichtung gegen den Modulträger und die zweite Filterkappe eine umfangsseitige Abdichtung eines Ablaufkanals im Modulträger bewerkstelligt. Durch eine translatorische Bewegung der Filterkappe ist der Ablaufkanal freigebbar und verschließbar.

Aus der DE 196 06 616 A1 ist ebenfalls ein Ölfilter für einen Verbrennungsmotor mit einem topfförmigen Gehäuse und einem auf dieses aufschraubbaren Deckel bekannt, bei welchem durch Abschrauben des Deckels ein bei geschlossenem Deckel verschlossener Ablaufkanal geöffnet wird. Der Deckel ist im Bereich seiner Stirnkante über eine in dem Filtergehäuse vorgesehene Axialringdichtung gegen das Filtergehäuse abgedichtet. Die radiale Abdichtung zwischen Filtergehäuse und Schraubdeckel wird durch eine weitere Ringdichtung bewerkstelligt.

Der Erfindung liegt die Aufgabe zugrunde, eine Ölfiltervorrichtung der eingangs genannten Art konstruktiv zu vereinfachen, insbesondere eine verhältnismäßig einfache Montage und Demontage der Filterkappe zu ermöglichen.

Die Aufgabe wird gelöst von einer Ölfiltervorrichtung mit den Merkmalen des Anspruchs 1. Bevorzugte und vorteilhafte Weiterbildungen sind Gegenstand der abhängigen Ansprüche.

Zur Lösung der Aufgabe wird eine Ölfiltervorrichtung mit einer Entölungseinrichtung vorgeschlagen, umfassend wenigstens ein Filtermodul, einen Modulträger und wenigstens eine Filterkappe zur Aufnahme (auch teilweise Aufnahme) und zur lösbaren Halterung dieses Filtermoduls an dem Modulträger. Weiterhin ist eine Filterkappendichtung zur Abdichtung der Filterkappe am Modulträger umfasst. Es ist vorgesehen, dass die Entölungseinrichtung durch wenigstens einen Ablaufkanal bzw. Ölablaufkanal im Modulträger gebildet ist und ein Ölablauf durch diesen Ablaufkanal mittels der Filterkappendichtung steuerbar ist bzw. gehandhabt wird, welche wahlweise diesen Ablaufkanal freigibt und verschließt. Durch den Ablaufkanal hindurch ist z. B. eine Entleerung der Filterkappe möglich, bevor die Filterkappe vom Modulträger abgenommen wird.

Die Erfindung basiert auf der Idee, die Entleerung der Filterkappe über wenigstens einen Ablaufkanal im Modulträger zu realisieren, wodurch Bauteile eingespart werden. Das Verschließen und Freigeben des Ablaufkanals soll durch die ohnehin erforderliche Filterkappendichtung erfolgen, was weiterhin Bauteile einspart. Die Filterkappendichtung übernimmt somit eine Doppelfunktion, indem sie einerseits (im Betriebszustand) die Filterkappe gegen den Modulträger abdichtet und indem sie andererseits (beim Abnehmen der Filterkappe) die Steuerung der Entleerung bewerkstelligt. Hierdurch ergibt sich eine einfache Montage und Demontage der Filterkappe, sowie eine hohe Funktionssicherheit und Zuverlässigkeit.

Die erfindungsgemäße Ölfiltervorrichtung eignet sich vorrangig zur Reinigung von Öl und insbesondere zur Reinigung von Motor- und/oder Getriebeöl, wobei jedoch auch andere Fluide gereinigt werden können.

Bei einer erfindungsgemäßen Ölfiltervorrichtung handelt es sich bevorzugt um eine Druckölfiltervorrichtung, bei welcher ein zu reinigender Ölvolumenstrom unter Druck durch das Filtermedium eines Druckölfiltermoduls gefördert wird. Das zu filtrierende Öl wird quasi in die Ölfiltervorrichtung hineingedrückt. Der Innenraum der Filterkappe ist hierbei in der Regel druckbeaufschlagt. Der erforderliche Förderdruck wird z.B. mittels einer Ölpumpe erzeugt. Alternativ kann es sich bei der erfindungsgemäßen Ölfiltervorrichtung auch um eine Saugölfiltervorrichtung handeln. Hierbei wird mittels Unterdruck das zu filtrierende Öl durch ein Saugölfiltermodul gesaugt, wobei der Saugunterdruck ebenfalls mittels einer Ölpumpe erzeugt werden kann. In diesem Fall ist der Innenraum der Filterkappe unterdruckbeaufschlagt.

Eine Filterkappe ist bevorzugt ein zylindrischer und insbesondere kreiszylindrischer Hohlkörper mit einer axialen Längserstreckung und einer Filterkappenwandung (bzw. Mantel), welche einseitig geöffnet bzw. einseitig durch einen Boden verschlossen ist, wobei sich der Boden an dem vom Modulträger abgewandeten axialen Ende befindet. Die Filterkappe kann, wie auch weitere wesentliche Bauteile der erfindungsgemäßen Ölfiltervorrichtung, aus einem Kunststoffmaterial, einem Metallmaterial oder einem Verbundmaterial gebildet sein.

Gemäß einer bevorzugten Weiterbildung ist vorgesehen, dass das Freigeben und Verschließen des Ablaufkanals durch eine translatorische Bewegung der Filterkappendichtung relativ zum Modulträger erfolgt, wozu die Filterkappe relativ zum Modulträger axial beweglich ist und die Filterkappendichtung an dem dem Modulträger zugewandten axialen Ende der Filterkappe befestigt ist und der axialen Bewegung der Filterkappe folgen kann.

Gemäß einer bevorzugten Weiterbildung ist vorgesehen, dass die Filterkappe relativ zum Modulträger axial beweglich ist und wenigstens drei Positionen einnehmen kann: eine Betriebsposition, eine Entleerungsposition und eine Abnehmposition; wobei in der Betriebsposition der Ablaufkanal von der Filterkappendichtung verschlossen und in der Entleerungsposition freigegeben ist. In der Betriebsposition ist die Filterkappe fest am Modulträger befestigt. Die Dichtheit wird über die Filterkappendichtung bewerkstelligt, welche in dieser Position gleichfalls den Ablaufkanal druckfest bzw. unterdruckfest verschließt. In der Entleerungsposition ist die Filterkappe aus ihrer Betriebposition gelöst, kann jedoch noch nicht vom Modulträger abgenommen werden, sondern ist noch an diesem gehaltert. In dieser Position ist der Ablaufkanal von der Filterkappendichtung freigegeben, so dass das Öl z.B. aus dem Innenraum der Filterkappe oder aus dem Ölsumpf des Motors und/oder Getriebes abfließen kann. Bevorzugt ist vorgesehen, dass die Filterkappendichtung in der Entleerungsposition noch gegen den Modulträger abdichtet. In der Abnehmposition kann die Filterkappe vom Modulträger abgenommen werden. Die Dichtfunktion der Filterkappendichtung ist in dieser Position aufgehoben. Beim Bewegen der Filterkappe von der Abnehmposition in die Betriebsposition (Festschrauben) und umgekehrt (Abschrauben bzw. Losschrauben) wird jeweils die Entleerungsposition durchfahren.

Gemäß einer bevorzugten Weiterbildung ist vorgesehen, dass wenigstens ein Anschlagmittel für die Filterkappe umfasst ist, welches eine axiale Endstellung der Filterkappe in ihrer Betriebsposition bestimmt und/oder dass wenigstens ein Rastmittel umfasst ist, welches eine temporäre Fixierung der Filterkappe in ihrer Entleerungsposition bewirkt. Ein Rastmittel für die Entleerungsposition kann insbesondere derart gestaltet sein, dass das Einrasten wahrnehmbar bzw. spürbar erfolgt.

Gemäß einer bevorzugten Weiterbildung ist vorgesehen, dass die Filterkappe mittels einer zentralen Schraubverbindung am Modulträger befestigbar ist, wobei eine Drehung der Filterkappe gleichfalls deren axiale Längsbewegung bewirkt. Über eine Drehbewegung der Filterkappe kann damit die Entölung gesteuert bzw. bewerkstelligt werden. Die Schraubverbindung ist bevorzugt durch ein Außengewinde auf der Filterkappenwandung an dem dem Modulträger zugewandten axialen Ende realisiert, welches in einen korrespondierenden Gewindeabschnitt am Modulträger eingreift.

Gemäß einer bevorzugten Weiterbildung ist vorgesehen, dass beim Lösen der Filterkappe aus ihrer Betriebsposition die Entleerungsposition bei einem im Wesentlichen exakt definierten Drehwinkel oder einer im Wesentlichen exakt definierten Anzahl von Umdrehungen eingenommen wird. Die Drehung der Filterkappe wird hierbei mit einem vorgegebenen Verhältnis in eine axiale Längsbewegung umgesetzt.

Gemäß der Erfindung ist vorgesehen, dass die Filterkappendichtung kreiszylindrisch ausgebildet ist und dass das Verschließen und Freigeben des Ablaufkanals im Wesentlichen mittels der Stirnfläche der Filterkappendichtung erfolgt. Dies wird nachfolgend im Zusammenhang mit den Figuren näher erläutert.

Gemäß der Erfindung ist vorgesehen, dass die Filterkappendichtung mit ihrer Außenumfangsfläche gegen ein zylindrischen Abschnitt des Modulträgers abdichtet, wozu an der Außenumfangsfläche der Filterkappendichtung wenigstens eine umlaufende Dichtlippe angeordnet ist, die sich dichtend und relativbeweglich an diesen zylindrischen Abschnitt anlegt. Bevorzugt sind an der Außenumfangsfläche zwei axial beanstandete Dichtlippen angeordnet.

Gemäß den beiden zuvor erläuterten Weiterbildungen wird die Doppelfunktion der Filterkappendichtung, wie oben bereits erläutert, einerseits axial durch die Stirnfläche der Filterkappendichtung und andererseits radial durch deren Umfangsfläche realisiert. Die Filterkappendichtung ist bevorzugt aus einem weichelastischen und ölfesten Material gebildet, wie z. B. einem Gummiwerkstoff. Ergänzend kann eine Kunststoff- oder Metallverstärkung vorgesehen sein.

Gemäß einer bevorzugten Weiterbildung ist vorgesehen, dass in der Filterkappenwandung im Bereich der Filterkappendichtung wenigstens eine Bypassöffnung angeordnet ist, durch die hindurch das Öl aus dem Innenraum der Filterkappe auf einem kurzen Weg in den Ablaufkanal abfließen kann, wenn sich die Filterkappe in der Entleerungsposition befindet. Das Abfließen des Öls erfolgt demnach über den Außenumfang. Dies wird nachfolgend im Zusammenhang mit den Figuren näher erläutert.

Bevorzugt ist vorgesehen, dass der Modulträger als ein separates Bauteil ausgebildet ist, mittels welchem die Ölfiltervorrichtung als Ganzes z. B. an einen Motor oder an ein Getriebe angeflanscht werden kann. In diesem Fall lässt sich die erfindungsgemäße Ölfiltervorrichtung als eine montagefähige Ölfiltereinheit auffassen. Gemäß einer bevorzugten Weiterbildung ist hingegen vorgesehen, dass der Modulträger als integraler Bestandteil einer übergeordneten Baueinheit ausgebildet ist. So kann der Modulträger z.B. in ein Motorgehäuse oder in ein Getriebegehäuse und insbesondere in eine Ölwanne integriert sein. Dies bedeutet, dass der erfindungsgemäße Ablaufkanal Bestandteil des Motorgehäuses und/oder des Getriebegehäuses oder der Ölwanne sein kann und insbesondere in diesem Gehäuse oder in dieser Ölwanne integriert ausgebildet ist. Die Erfindung erstreckt sich somit auch auf ein solches Motorgehäuse oder Getriebegehäuse und insbesondere auch auf eine solche Ölwanne. Auch sind diverse Kombinationen dieser Ausführungsmöglichkeiten denkbar.

Die Erfindung wird nachfolgend anhand eines bevorzugten Ausführungsbeispiels in Zusammenhang mit den Figuren näher erläutert. Es zeigen jeweils schematisch in einer Schnittansicht und einer vergrößerten Detailansicht:
- Fig. 1:: eine erfindungsgemäße Ölfiltervorrichtung, deren Filterkappe sich in der Betriebs- position befindet; und
- Fig. 2:: die Ölfiltervorrichtung der Fig. 1, wobei sich die Filterkappe in der Entleerungsposi- tion befindet.

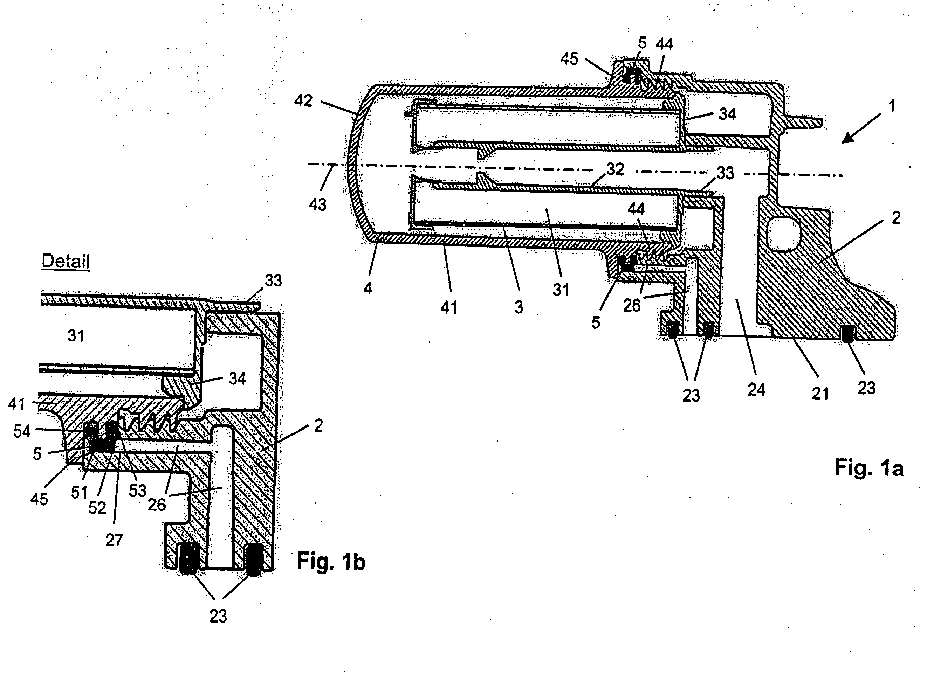

Fig. 1a zeigt eine insgesamt mit 1 bezeichnete Ölfiltervorrichtung in einer schematischen Schnittansicht. Die Ölfiltervorrichtung 1 umfasst einen als Filtergehäuse ausgebildeten, einstückigen Modulträger 2, an dem ein auswechselbares Filtermodul 3 mittels einer abnehmbaren Filterkappe 4 gehaltert ist.

Der Modulträger bzw. das Filtergehäuse 2 ist über einen Flanschabschnitt 21 an einem nicht dargestellten Motor- oder Getriebegehäuse (oder dergleichen) befestigt. Zur Abdichtung dienen Flanschdichtungen 23. Alternativ kann der Modulträger 2 auch integral mit dem Motor-oder Getriebegehäuse ausgebildet sein, wie oben erläutert. Der Ölvolumenstrom durch die Ölfiltervorrichtung 1 erfolgt durch Strömkanäle 24, welche im Modulträger 2 ausgebildet sind. Im Modulträger 2 ist ferner ein in dieser Darstellung sichtbarer Ablaufkanal 26 vorhanden, welcher zur Entleerung des Innenraums der Filterkappe 4 dient, bevor die Filterkappe 4 vom Modulträger 2 abgenommen wird, wie nachfolgend noch näher erläutert.

Das Filtermodul 3 umfasst ein Filtermedium 31, das um einen zentralen Filterhalter 32 herum angeordnet ist. Der einstückige Filterhalter 32 ist mit einer axialen Verlängerung 33 formschlüssig in einem korrespondierenden Abschnitt im Modulträger 2 eingesteckt. Die Befestigung und Arretierung des Filtermoduls 3 in der gezeigten Position erfolgt über den Flanschabschnitt 34 mittels der Filterkappe 4. Bei dem gezeigten Filtermodul 3 handelt es sich um ein Druckölfiltermodul. Alternativ kann es sich auch um ein Saugölfiltermodul handeln.

Die Filterkappe 4 weist eine zylindrische Filterkappenwandung 41 mit einem Boden 42 auf. Die Längsachse ist mit 43 bezeichnet. An dem dem Modulträger 2 zugewandten axialen Ende ist auf der Filterkappenwandung 41 ein zentrales Außengewinde 44 ausgebildet, welches in einen korrespondierenden Innengewindeabschnitt am Modulträger 2 eingreift und worüber die Filterkappe 4 am Modulträger 2 befestigt bzw. gehaltert ist. Durch Drehen der Filterkappe 4, wozu diese z.B. von außen an der Filterkappenwandung 41 per Hand oder mittels eines Werkzeugs gegriffen werden kann, wird eine axiale Bewegung der Filterkappe 4 in Richtung der Längsachse 43 relativ zum Modulträger 2 bewirkt. Gemäß der Darstellung wird die Filterkappe 4 beim Festschrauben axial nach rechts und beim Abschrauben bzw. Losschrauben axial nach links bewegt. Eine Schulter 45 an der Filterkappenwandung 41 begrenzt die axiale Bewegung der Filterkappe 4 beim Festschrauben.

Die Abdichtung zwischen der Filterkappe 4 und dem Modulträger 2 erfolgt mittels einer Filterkappendichtung 5. Die Filterkappendichtung 5 ist kreisringzylindrisch ausgebildet und weist im Querschnitt in erster Näherung eine Rechteckform auf. Die Filterkappendichtung 5 ist an dem dem Modulträger 2 zugewandten axialen Ende der Filterkappe 4 formschlüssig befestigt, bspw. in Art einer Nut-Feder-Verbindung wie aus der vergrößerten Detailansicht in Fig. 1b ersichtlicht. Die Filterkappendichtung 5 ist in einer geschützten Position benachbart zur Schulter 45 der Filterkappe 4 angeordnet.

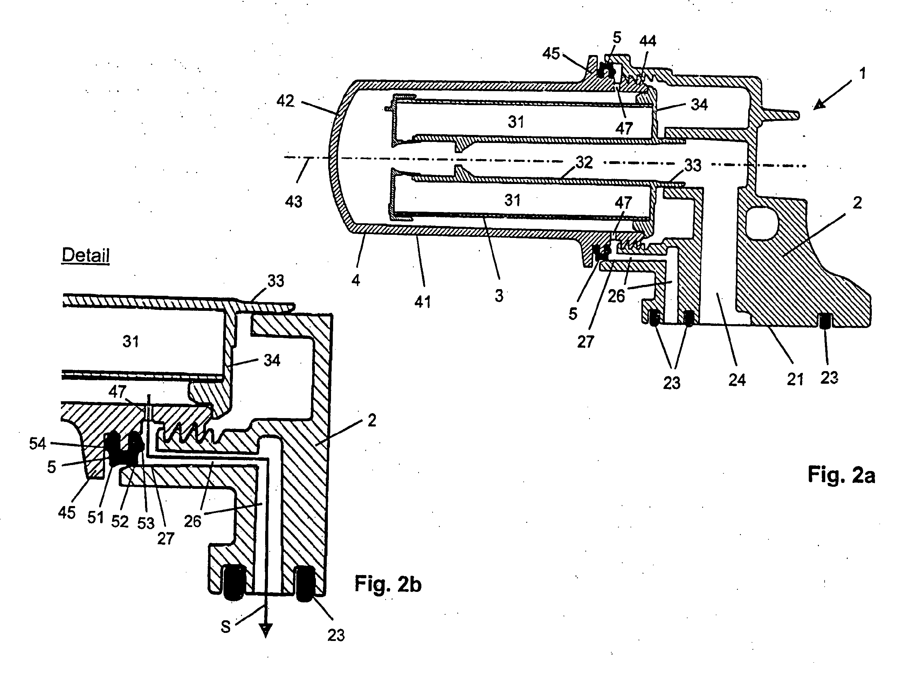

Die Fig. 1a zeigt die Ölfiltervorrichtung 1 im Betriebszustand in dem sich die Filterkappe 4 in der Betriebsposition befindet. In dieser Betriebsposition dichtet die Filterkappendichtung 5 über ihre Außenumfangsfläche radial gegen einen zylindrischen Abschnitt 27 des Modulträgers 2 ab. Hierzu sind an der Außenumfangsfläche der Filterkappendichtung 5 zwei axial beabstandete Dichtlippen 51 und 52 angeordnet, was sich aus der Detailansicht der Fig. 1b ergibt. Ferner dichtet die Filterkappendichtung 5 mit ihrer von der Schulter 45 abgewandten Stirnflächeseite axial gegen den Modulträger 2 ab, in dem gezeigten Beispiel gegen die Stirnfläche des Gewindeabschnitts, und verschließt hierdurch druckfest den Ablaufkanal 26, so dass kein Öl vom Innenraum der Filterkappe 4 in diesen Ablaufkanal 26 übertreten kann. Hierzu ist an der vorderen Stirnfläche der Filterkappendichtung 5 eine vorstehende Dichtwulst 53 ausgebildet (siehe Fig. 2b). Eine Wulst 54 befindet sich auch an der hinteren Stirnfläche der Filterkappendichtung 5 und dient hier vorrangig deren Beabstandung zum Schulterabschnitt 45 der Filterkappe 4.

Falls die Filterkappe 4 vom Modulträger 2 abgenommen werden soll, bspw. um das Filtermodul 3 auszutauschen, wird die Filterkappe 4 von der in Fig. 1 gezeigten Betriebsposition zunächst in eine Entleerungsposition gebracht. Diese Entleerungsposition ist in den Fig. 2a und 2b gezeigt. Die Filterkappe 4 ist hier gegenüber der Fig. 1 um einen geringen Betrag (wenige Millimeter) nach links verschoben.

Die Entleerungsposition wird ausgehend von der Betriebsposition erreicht, indem die Filterkappe 4 mit einem definierten Drehwinkel oder einer definierten Anzahl von Umdrehungen (bevorzugt exakt eine Vollumdrehung, was 360° entspricht) gelöst wird. Aufgrund der Schraubverbindung zwischen der Filterkappe 4 und dem Modulträger 2 wird diese Drehbewegung in eine Axialbewegung der Filterkappe 4 relativ zum Modulträger 2 umgesetzt. Da die Filterkappendichtung 5 an dem dem Modulträger 2 zugewandten axialen Ende der Filterkappe 4 formschlüssig befestigt ist, folgt diese der axialen Bewegung der Filterkappe 4 (gemäß Darstellung nach links) und dichtet hierbei gleichzeitig radial gegen den zylindrischen Abschnitt 27 des Modulträgers 2 ab, während die axiale Abdichtung des Ablaufkanals 26 aufgehoben wird, indem sich vor der vorderen Stirnfläche der Filterkappendichtung 5 ein Zwischenraum ausbildet. Der Ablaufkanal 26 erstreckt sich von dem zylindrischen Abschnitt 27 ausgehend.

Am Modulträger 2 und/oder an der Filterkappe 4 können nicht näher spezifizierte Rastmittel vorgesehen sein, welche ein temporäres Einrasten der Filterkappe 4 in die Entleerungsposition bewirken. Alternativ oder ergänzend kann an der Filterkappe 4 eine Zeigereinrichtung vorgesehen sein, wie z.B. eine Markierung auf der Außenfläche des Bodens 42, mittels welcher ein Drehwinkel optisch erfasst werden kann.

Befindet sich die Filterkappe 4 in der Entleerungsposition so kann das im Innenraum der Filterkappe 4 befindliche Öl durch den rechtsseitig der vorderen Stirnfläche der Filterkappendichtung 5 gebildeten Zwischenraum in den Ablaufkanal 26 abfließen und z.B. in das Getriebe-oder Motorgehäuse zurückfließen, was in der vergrößerten Detailansicht der Fig. 2b mit dem Strömungspfeil S angedeutet ist. In gleicher Weise könnte auch das im Ölsumpf von Getriebe und/oder Motor befindliche Öl z.B. in ein externes Behältnis abfließen. Wie gezeigt erfolgt das Abfließen über den Außenumfang, d.h. nach radial außen. Besonders bevorzugt ist vorgesehen, dass mehrere Ablaufkanäle 26 vorhanden sind, die bzgl. des Außenumfangs der Filterkappe 4 gleichmäßig im Modulträger 2 verteilt angeordnet sind. Die radiale Abdichtung mittels der Filterkappendichtung 5 gegen den zylindrischen Abschnitt 27 verhindert hierbei, dass Öl aus der Filterkappe 4 ungewollt nach außen treten kann.

Um das Abfließen des Öls in den Ablaufkanal 26 zu erleichtern, sind in der Filterkappenwandung 41 mehrere Bypassöffnungen 47 eingebracht. Diese befinden sich zwischen der Schulter 45 bzw. der Filterkappendichtung 5 und dem Außengewindeabschnitt 44 und sind somit im Wesentlichen in derselben axialen Position angeordnet, wie der vor der vorderen Stirnfläche der Filterkappendichtung 5 gebildete Zwischenraum. Ein umständliches Abfließen durch die Verschraubung hindurch kann damit umgangen werden. Bevorzugt sind mehrere solcher Bypassöffnungen 47 vorgesehen, die gleichmäßig verteilt über dem Umfang der Filterkappe 4 angeordnet sind.

Nach dem Entleeren des Innenraums der Filterkappe 4 in der Entleerungsposition kann nun die Filterkappe 4 in eine Abnehmposition gebracht werden, wozu diese ganz herausgedreht wird und vom Modulträger 2 abgenommen werden kann.

## Patentansprüche

1. Ölfiltervorrichtung (1) mit einer Entölungseinrichtung, umfassend:
- wenigstens ein Filtermodul (3);
- einen Modulträger (2);
- wenigstens eine Filterkappe (4) zur Aufnahme und zur lösbaren Halterung dieses Filtermoduls (3) an dem Modulträger (2) und
- eine Filterkappendichtung (5) zur Abdichtung der Filterkappe (4) am
Modulträger (2);
wobei die Entölungseinrichtung durch wenigstens einen Ablaufkanal (26) im Modulträger (2) gebildet ist und ein Ölablauf durch diesen Ablaufkanal (26) mittels der Filterkappendichtung (5) steuerbar ist, welche wahlweise diesen Ablaufkanal (26) freigibt und verschließt, wobei das Freigeben und Verschließen des Ablaufkanals (26) durch eine translatorische Bewegung der Filterkappendichtung (5) relativ zum Modulträger (2) erfolgt, wobei die Filterkappe (4) relativ zum Modulträger (2) axial beweglich ist und die Filterkappendichtung (5) an dem dem Modulträger (2) zugewandten axialen Ende der Filterkappe (4) befestigt ist und der axialen Bewegung der Filterkappe (4) folgen kann und wobei die Filterkappendichtung (5) kreisringzylindrisch ausgebildet, **dadurch gekennzeichnet, dass** das Verschließen und Freigeben des Ablaufkanals (26) mittels der Stirnfläche der Filterkappendichtung (5) erfolgt und dass die Filterkappendichtung (5) mit ihrer Außenumfangsfläche gegen einen zylindrischen Abschnitt (27) des Modulträgers abdichtet, wozu an der Außenumfangsfläche der Filterkappendichtung (5) wenigstens eine umlaufende Dichtlippe (51; 52) angeordnet ist, die sich dichtend und relativbeweglich an diesen zylindrischen Abschnitt (27) anlegt.

2. Ölfiltervorrichtung (1) nach Anspruch 1, **dadurch gekennzeichnet, dass** die Filterkappe (4) relativ zum Modulträger (2) axial beweglich ist und wenigstens drei Positionen einnehmen kann: eine Betriebsposition, eine Entleerungsposition und eine Abnehmposition; wobei in der Betriebsposition der Ablaufkanal (26) von der Filterkappendichtung (5) verschlossen ist und in der Entleerungsposition freigegeben ist.

3. Ölfiltervorrichtung (1) nach Anspruch 2, **dadurch gekennzeichnet, dass** beim Lösen der Filterkappe (4) aus ihrer Betriebsposition diese zunächst die Entleerungsposition einnimmt, in welcher der Ablaufkanal (26) freigegeben und die Filterkappe (4) noch am Modulträger (2) gehalten ist.

4. Ölfiltervorrichtung (1) nach Anspruch 2 oder 3, **dadurch gekennzeichnet, dass** wenigstens ein Anschlagmittel (45) für die Filterkappe (4) umfasst ist, welches eine axiale Endstellung der Filterkappe (4) in ihrer Betriebsposition bestimmt und/oder dass wenigstens ein Rastmittel umfasst ist, welches eine temporäre Fixierung der Filterkappe (4) in ihrer Entleerungsposition bewirkt.

5. Ölfiltervorrichtung (1) nach einem der vorausgehenden Ansprüche, **dadurch gekennzeichnet, dass** die Filterkappe (4) mittels einer zentralen Schraubverbindung am Modulträger (2) befestigbar ist, wobei eine Drehung der Filterkappe (4) deren axiale Längsbewegung bewirkt.

6. Ölfiltervorrichtung (1) nach Anspruch 5, **dadurch gekennzeichnet, dass** beim Lösen der Filterkappe (4) aus ihrer Betriebsposition die Entleerungsposition bei einem definierten Drehwinkel oder einer definierten Anzahl von Umdrehungen eingenommen wird.

7. Ölfiltervorrichtung (1) nach einem der vorausgehenden Ansprüche,
**dadurch gekennzeichnet, dass** in der Filterkappenwandung (41) im Bereich der Filterkappendichtung (5) wenigstens eine Bypassöffnung (47) angeordnet ist, durch die hindurch das Öl aus dem Innenraum der Filterkappe (4) auf einem kurzen Weg in den Ablaufkanal (26) abfließen kann.

8. Ölfiltervorrichtung (1) nach einem der vorausgehenden Ansprüche,
**dadurch gekennzeichnet, dass** diese eine Druckölfiltervorrichtung ist.

9. Ölfiltervorrichtung (1) nach einem der Ansprüche 1 bis 7, **dadurch gekennzeichnet, dass** diese eine Saugölfiltervorrichtung ist.

10. Ölfiltervorrichtung (1) nach einem der vorausgehenden Ansprüche, **dadurch gekennzeichnet, dass** der Modulträger (2) als integraler Bestandteil einer übergeordneten Baueinheit, wie insbesondere einer Ölwanne, ausgebildet ist.

## Claims

1. Oil filter device (1) with a de-oiling device, comprising:
- at least one filter module (3);
- a module carrier (2);
- at least one filter cap (4) to accommodate and releasably mount this filter module (3) on the module carrier (2) and
- a filter cap seal (5) for sealing the filter cap (4) on the module carrier (2);
wherein the de-oiling device is formed by at least one drainage duct (26) in the module carrier (2) and oil drainage via this drainage duct (26) can be controlled by means of the filter cap seal (5), which optionally opens and closes this drainage duct (26), wherein the opening and closing of the drainage channel (26) take place by a translational movement of the filter cap seal (5) relative to the module carrier (2), wherein the filter cap (4) can be axially moved relative to the module carrier (2) and the filter cap seal (5) is fastened on the axial end of the filter cap (4) facing the module carrier (2) and the axial movement of the filter cap (4) can follow and wherein the filter cap seal (5) has a circular cylindrical shape, **characterised in that** the closing and opening of the drainage duct (26) is effected by means of the end face of the filter cap seal (5) and that the outer periphery surface of the filter cap seal (5) seals against a cylindrical section (27) of the module carrier, wherein at least one peripheral sealing lip (51; 52) is arranged on the outer peripheral surface of the filter cap seal (5), which locates on this cylindrical section (27) in a sealing and relatively movable manner.

2. Oil filter device (1) in accordance with claim 1, **characterised in that** the filter cap (4) can move axially relative to the module carrier (2) and can adopt at least three positions: an operating position, an emptying position and a removal position; wherein the drainage duct (26) is closed by the filter cap seal (5) in the operating position (26) and is open in the emptying position.

3. Oil filter device (1) in accordance with claim 2, **characterised in that**, when the filter cap (4) is released from its operating position, this initially adopts the emptying position, in which the drainage duct (26) is opened and the filter cap (4) is still retained on the module carrier (2).

4. Oil filter device (1) in accordance with claim 2 or 3, **characterised in that** at least one limit stop means (45) is included for the filter cap (4), which determines an axial limit position of the filter cap (4) in its operating position and/or that at least catch means is included, which brings about a temporary securing of the filter cap (4) in its emptying position.

5. Oil filter device (1) in accordance with one of the preceding claims, **characterised in that** the filter cap (4) can be fastened on the module carrier (2) by means of a central screw connection, whereby a rotation of the filter cap (4) brings about its axial movement.

6. Oil filter device (1) in accordance with claim 5, **characterised in that** when the filter cap (4) is disengaged from its operating position the emptying position is adopted with a defined angle of rotation or a definite number of turns.

7. Oil filter device (1) in accordance with one of the preceding claims, **characterised in that** at least one bypass opening (47) is arranged in the filter cap wall (41) in the region of the filter cap seal (5), through which the oil can drain from the interior of the filter cap (4) by a short route into the drainage duct (26).

8. Oil filter device (1) in accordance with one of the preceding claims, **characterised in that** this is a pressure filter device.

9. Oil filter device (1) in accordance with one of the claims 1 to 7, **characterised in that** this is a suction filter.

10. Oil filter device (1) in accordance with one of the preceding claims, **characterised in that** the module carrier (2) is configured as a part of an overall unit, in particular an oil sump.

## Revendications

1. Dispositif de filtre à huile (1) avec un dispositif de déshuilage, comportant
- au moins un module de filtrage (3) ;
- un porte-module (2) ;
- au moins un bouchon-filtre (4) permettant de recevoir et de fixer de manière amovible ledit module de filtrage (3) sur le porte-module (2) ; et
- un joint d'étanchéité (5) permettant d'étancher le bouchon-filtre (4) sur le porte-module (2) ;
ledit dispositif de déshuilage étant formé par au moins un conduit d'évacuation (26) dans le porte-module (2), et l'évacuation de l'huile via ledit conduit d'évacuation (26) pouvant être commandée par le joint d'étanchéité (5) du bouchon-filtre qui, au choix, ouvre et ferme ledit conduit d'évacuation (26), l'ouverture et la fermeture du conduit d'évacuation (26) étant assurées par un mouvement de translation du joint d'étanchéité (5) par rapport au porte-module (2), le bouchon-filtre (4) étant mobile dans le sens axial par rapport au porte-module (2), et le joint d'étanchéité (5) étant fixé sur l'extrémité axiale du bouchon-filtre (4), orientée vers le porte-module (2), et pouvant suivre le mouvement axial du bouchon-filtre (4), et le joint d'étanchéité (5) étant réalisé sous forme cylindrique circulaire,
**caractérisé en ce que** la fermeture et l'ouverture du conduit d'évacuation (26) sont effectuées au moyen de la face frontale du joint d'étanchéité (5) du bouchon-filtre, et **en ce que** ledit joint d'étanchéité (5), par sa surface périphérique extérieure, assure l'étanchéité d'une partie cylindrique (27) du porte-module (2), et à cet effet, au moins une lèvre d'étanchéité (51 ; 52) périphérique, qui prend appui de manière étanche et mobile sur ladite partie cylindrique (27), est aménagée sur la surface périphérique extérieure du joint d'étanchéité (5).

2. Dispositif de filtre à huile (1) selon la revendication 1, **caractérisé en ce que** le bouchon-filtre (4) est mobile dans le sens axial par rapport au porte-module (2) et peut être amené dans au moins trois positions : une position de service, une position de vidange et une position d'enlèvement ; le conduit d'évacuation (26) étant fermé par le joint d'étanchéité (5) dans la position de service et étant ouvert dans la position de vidange.

3. Dispositif de filtre à huile (1) selon la revendication 2, **caractérisé en ce que**, lorsque le bouchon-filtre (4) est amené hors de sa position de service, il est amené d'abord dans la position de vidange, dans laquelle le conduit d'évacuation (26) est ouvert et le bouchon-filtre (4) est encore fixé sur le porte-module (2).

4. Dispositif de filtre à huile (1) selon la revendication 2 ou 3, **caractérisé en ce qu'**il est prévu au moins un moyen de butée (45) pour le bouchon-filtre (4), lequel définit une position finale axiale du bouchon-filtre (4) dans sa position de service, et/ou **en ce qu'**il est prévu au moins un moyen de blocage, qui immobilise temporairement le bouchon-filtre (4) dans sa position de vidange.

5. Dispositif de filtre à huile (1) selon l'une quelconque des revendications précédentes, **caractérisé en ce que** le bouchon-filtre (4) peut être fixé sur le porte-module (2) par un assemblage vissé central, une rotation du bouchon-filtre (4) induisant un mouvement longitudinal axial de celui-ci.

6. Dispositif de filtre à huile (1) selon la revendication 5, **caractérisé en ce que**, lorsque le bouchon-filtre (4) est amené hors de sa position de service, il est amené dans la position de vidange par un angle de rotation défini ou par un nombre défini de rotations.

7. Dispositif de filtre à huile (1) selon l'une quelconque des revendications précédentes, **caractérisé en ce que** dans la paroi (41) du bouchon-filtre, dans la zone du joint d'étanchéité (5), est aménagée au moins une ouverture de by-pass (47), à travers laquelle l'huile peut circuler hors de l'espace intérieur du bouchon-filtre (4) vers le conduit d'évacuation (26) en suivant le trajet le plus court.

8. Dispositif de filtre à huile (1) selon l'une quelconque des revendications précédentes, **caractérisé en ce que** ledit dispositif est un dispositif de filtrage d'huile par pression.

9. Dispositif de filtre à huile (1) selon l'une quelconque des revendications 1 à 7, **caractérisé en ce que** ledit dispositif est un dispositif de filtrage d'huile par aspiration.

10. Dispositif de filtre à huile (1) selon l'une quelconque des revendications précédentes, **caractérisé en ce que** le porte-module (2) est réalisé sous la forme d'une pièce intégrale d'une unité structurelle supérieure, telle que, en particulier, un carter d'huile.
